(19)

Europäisches
Patentamt
European
Patent Office
Office européen
des brevets

(11)  **EP 1 850 323 A1**

(12)  # EUROPEAN PATENT APPLICATION

(43) Date of publication:
**31.10.2007  Bulletin 2007/44**

(51) Int Cl.:
*G10L 13/08* *(2006.01)*

(21) Application number: **07015758.1**

(22) Date of filing: **29.10.2002**

(84) Designated Contracting States:
**DE GB NL**

(30) Priority: **06.11.2001  US 13239**

(62) Document number(s) of the earlier application(s) in
accordance with Art. 76 EPC:
**02802680.5 / 1 444 686**

(71) Applicant: **D.S.P.C. Technologies LTD.
Pethach Tikva 49527 (IL)**

(72) Inventor: **Griniasty, Meir
Givat Shmuel 51905 (IL)**

(74) Representative: **Dunlop, Hugh Christopher et al
R G C Jenkins & Co.
26 Caxton Street
London SW1H 0RJ (GB)**

Remarks:
This application was filed on 10 - 08 - 2007 as a
divisional application to the application mentioned
under INID code 62.

(54)  **HMM-based text-to-phoneme parser and method for training same**

(57)     An HMM-based text-to-phoneme parser uses
probability information within a probability database to
generate one or more phoneme strings for a written input
word. Techniques for training the text-to-phoneme parser
are provided.

*Fig. 6*

EP 1 850 323 A1

## Description

### FIELD OF THE INVENTION

The invention relates generally to speech processing and, more particularly, to speech recognition systems and techniques.

### BACKGROUND OF THE INVENTION

In some speech recognition systems, hidden Markov models (HMMs) of words are obtained by a concatenation of phoneme HMM's. To build word models in such systems, one needs to know the phoneme string that corresponds to the word. In many cases, the phoneme string for a word (i.e., the pronunciation) can be found in a phonetic dictionary. However, many valid words (e.g., family names, business names, etc.) are not typically included within a phonetic dictionary. Therefore, there is a general need for a text-to-phoneme parser that can automatically generate a phoneme string for a written word.

### BRIEF DESCRIPTION OF THE DRAWINGS

Fig. 1 is a diagram illustrating a conventional HMM process;
Fig. 2 is a block diagram illustrating a text-to-phoneme parsing system in accordance with an embodiment of the present invention;
Figs. 3 and 4 are portions of a flowchart illustrating a method of training an HMM-based text-to-phoneme parser system in accordance with an embodiment of the present invention;
Fig. 5 is a diagram illustrating a two-dimensional Viterbi search table in accordance with an embodiment of the present invention; and
Fig. 6 is a diagram illustrating a modified HMM process in accordance with an embodiment of the present invention.

### DETAILED DESCRIPTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The present invention relates to methods and structures for training and implementing a text-to-phoneme parser that uses hidden Markov models (HMM). Unlike parsers that utilize decision tree technology, an HMM-based text-to-phoneme parser does not require the use of expert linguistic knowledge during a training session. An HMM-based parser also uses significantly less memory than a decision tree parser. In addition, while decision tree parsers typically generate a single pronunciation for a given word, HMM-based text-to-phoneme parsers are capable of generating multiple different pronunciations for a word with corresponding reliability information. As can be appreciated, this feature may be used to improve speech recognition accuracy. The inventive principles may be used in connection with a wide variety of languages and are most beneficial with languages that have relatively complex rules governing the relationship between text and speech (e.g., English).

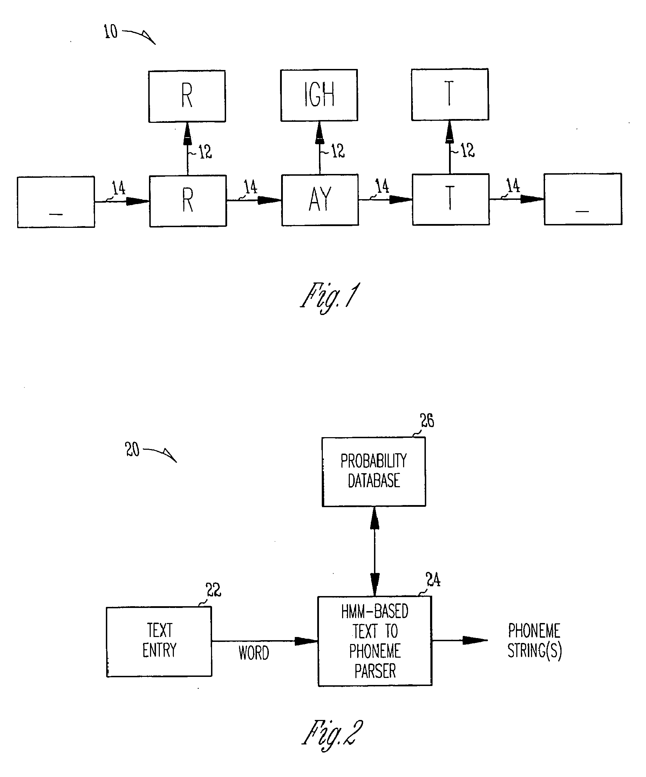

Phonemes represent the basic sounds that are used to build words. In a speech system using HMMs, both the letters and the phonemes of a word are used to form an HMM for the word. The phonemes of the word correspond to the hidden states of the HMM and obey a first order Markov process. Fig. 1 is a diagram illustrating a conventional HMM process 10 as applied to the word "right." On the upper portion of the diagram are the letters of the word arranged as a series of letter strings (i.e., "R," "IGH," and "T"). On the lower portion of the diagram are the phonemes that make up the spoken word (i.e., "R," "AY," and "T"). The blocks having a "_" symbol within them represent the empty phoneme (i.e., the silence phoneme). As part of the HMM process 10, the phonemes of the word are said to "emit" the corresponding letter strings. These emissions are represented in Fig. 1 by arrows 12. The Markov process also takes into consideration the transitions between successive phonemes in the word. These transitions are represented in Fig. 1 by arrows 14.

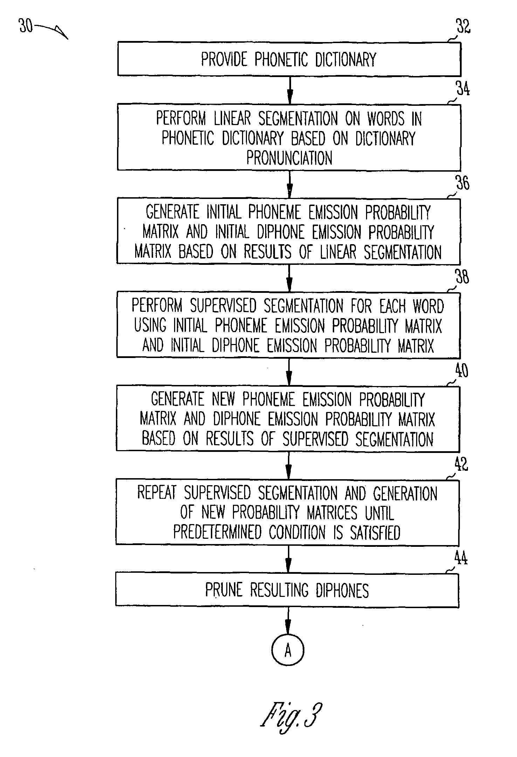

Fig. 2 is a block diagram illustrating a text-to-phoneme parsing system 20 in accordance with an embodiment of the present invention. As illustrated, the system 20 includes: a text entry unit 22, an HMM-based text-to-phoneme parser 24, and a probability database 26. The text entry unit 22 is operative for submitting a written word to the HMM-based text-to-phoneme parser 24 for processing. The text entry unit 22 may include, for example, a computer keyboard or other manual data entry device that allows a user to input a word. Other types of text entry device are also possible. The HMM-based text-to-phoneme parser 24 analyzes the written word to determine one or more phoneme strings for the word. The phoneme string(s) that is (are) generated may then be used to develop one or more Markov models for the corresponding word. To generate a phoneme string for an input word, the HMM-based text-to-phoneme parser 24 uses probability information stored within the probability database 26. Among other things, the probability database 26 will often include information relating to transition and emission probabilities for a given phonetic dictionary. The HMM-based text-to-phoneme parser 24 uses this information during the Markov process to identify one or more phoneme strings having the highest likelihood(s) for the input word.

Before the system 20 of Fig. 2 can be used, the system needs to be "trained" to develop the probability information in the database 26. This training will characterize the statistical connection between the letters and phonemes of the subject language. Before the training process is commenced, a number of assumptions may be made that relate to the makeup of the subject language. One such assumption places a limit on the length of the letter string that can be emitted by a single phoneme. For example, in at least one English language embodiment, it is assumed that a single phoneme can only emit letter strings that are from one to four letters in length. Another such assumption assumes that two phonemes can combine to emit a single letter (e.g., in the word "sex," phonemes "K" and "S" can combine to emit the letter "x"). Such combinations will be referred to herein as "diphones." In general, the diphones will not be known before training is commenced and thus need to be identified during training. Other assumptions may also be made.

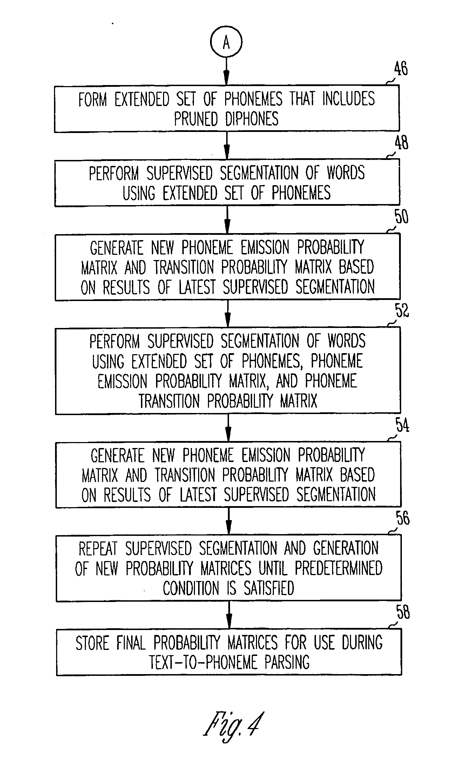

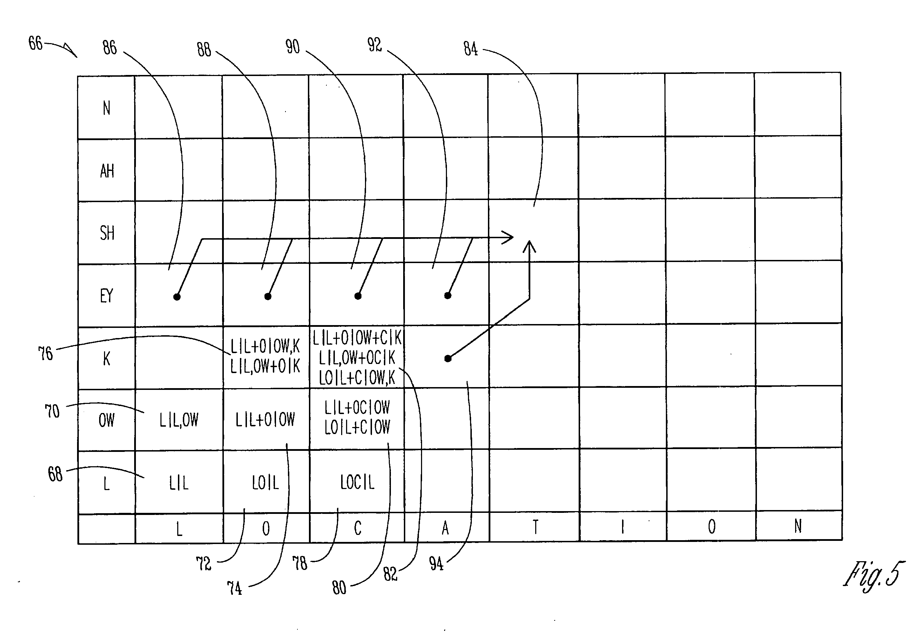

Figs. 3 and 4 are portions of a flowchart illustrating a method for training an HMM-based text-to-phoneme parser system in accordance with an embodiment of the present invention. In at least one implementation, some or all of the method is implemented in software for execution within one or more digital processing devices (e.g., a general purpose microprocessor, a digital signal processor (DSP), a reduced instruction set computer (RISC), a complex instruction set computer (CISC), a field programmable gate array (FPGA), and/or others). To initiate the training process, a phonetic dictionary is first provided that includes pronunciations for a given vocabulary of words (block 32). This dictionary may include, for example, any of a variety of commercially available phonetic dictionaries. In one implementation, the Carnegie Mellon University (CMU) Pronouncing Dictionary is used. The CMU Pronouncing Dictionary includes approximately 127,000 English words with their corresponding phonetic pronunciations. The CMU Pronouncing Dictionary also defines 39 individual phonemes in the English language. Other dictionaries may alternatively be used.

Linear segmentation is first performed on the words of the phonetic dictionary based on the corresponding pronunciations in the dictionary (block 34). During linear segmentation, each word is divided linearly into chunks, with the number of chunks equaling the number of phonemes in the corresponding dictionary pronunciation. If the number of phonemes exceeds the number of letters in the word, it may be assumed that a diphone is present. Based on the results of the linear segmentation, an initial phoneme emission probability matrix and diphone emission probability matrix are generated (block 36). The phoneme emission probability matrix includes probabilities that particular letter strings will be emitted by particular phonemes (i.e., P(letter string | phoneme)). The diphone emission probability matrix includes probabilities that particular letters will be emitted by particular phoneme pairs (i.e., P(letter | phoneme1, phoneme2)). In one approach, each probability is determined by a simple count using the linear segmentation information. For example, P(letter string | phoneme) will equal the number of occurrences of the letter string in conjunction with the phoneme divided by the total number of occurrences of the phoneme within the linear segmentation information. Similarly, P(letter | phoneme1, phoneme2) will equal the number of occurrences of the letter in conjunction with the phoneme pair (i.e., phoneme1, phoneme2) divided by the total number of occurrences of the phoneme pair in the linear segmentation information.

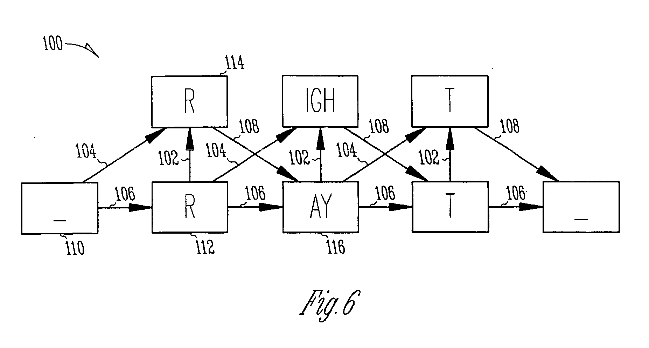

Using the initial emission probability matrices, a supervised segmentation is next performed to segment each word in the dictionary into its corresponding phonemes (block 38). This segmentation is called "supervised" segmentation because it is performed using a known string of phonemes. In one approach, the supervised segmentation is performed using Viterbi search techniques. Fig. 5 is a diagram illustrating a two-dimensional table 66 that may be used to perform a Viterbi search for the word "location." As shown, the horizontal axis of the table 66 lists the individual letters of the word (one letter to each column) and the vertical axis lists the individual phonemes for the word that were obtained from the phonetic dictionary (one phoneme to each row). Starting at square 68 in the lowermost left corner, a series of paths are developed through the table 66 to find a path that "most likely" represents the proper segmentation of the corresponding word. To ensure causality, the Viterbi process is preferably performed from left to right in the table 66 on a column by column basis, with all phonemes being addressed in one column before proceeding to the next. Probability scores are determined for individual paths in the table 66 using the information from the initial phoneme emission probability matrix and the initial diphone emission probability matrix. If log probabilities are used, the scores will typically consist of probability sums. If conventional probabilities are used, the scores will typically consist of probability products. In the discussion that follows, it is assumed that log probabilities are being used.

With reference to Fig. 5, within square 68, the probability that the phoneme "L" will emit the letter "L" is entered (indicated in the figure as L|L, where the second L is the phoneme). In square 70, the probability that the phoneme pair "L, OW" will emit the letter "L" (i.e., a diphone) is entered. In square 72, the probability that phoneme "L" will emit the letter string "LO" is entered. In square 74, the sum of: (a) the probability that phoneme "L" will emit the letter "L" and (b) the probability that phoneme "OW" will emit the letter "O" is entered. As is apparent, a path has been created from square 68 to square 74 and the sum represents the score of the path to this square. Two paths lead to square 76 in table 66. In one search approach, scores are calculated for each of these paths and the higher of the two scores is then recorded for the square along with the corresponding path information. The first path that leads to square 76 comes from square 68 and involves the emission of the letter "O" by the phoneme pair "OW, K." The score for this path is the sum of: (a) the probability that phoneme "L" will emit the letter "L" (from square 68) and (b) the probability that the phoneme pair "OW, K" will emit the letter "O." The second path that leads to square 76 comes from square 70 and involves the emission of the letter "O" by the phoneme "K." The score for this path is the sum of: (a) the probability that the phoneme pair "L, OW" will emit the letter "L" (from square 70) and (b) the probability that phoneme "K" will emit the letter "O." After scores have been calculated for the two paths, the higher score is recorded along with the corresponding path information.

In square 78, the probability that the phoneme "L" will emit the letter string "LOC" is entered as the score. Like square 76, two paths lead square 80. The first path, from square 68, has a score that is the sum of: (a) the probability that phoneme "L" will emit the letter "L" (from square 68) and (b) the probability that phoneme "OW" will emit the letter string "OC." The second path, from square 72, has a score that is the sum of: (a) the probability that phoneme "L" will emit the letter string "LO" (from square 72) and (b) the probability that phoneme "OW" will emit the letter "C." Again, the higher score is recorded along with the corresponding path information. Three paths lead to square 82. The first path, from square 74, has a score that is the sum of the score of square 74 and the probability that phoneme "K" will emit the letter "C." The second path, from square 70, has a score that is the sum of the score of square 70 and the probability that phoneme "K" will emit the letter string "OC." The third path, from square 72, has a score that is the sum of the score of square 72 and the probability that phoneme pair "OW, K" will emit the letter "C." The highest of the three scores is then recorded along with corresponding path information.

The same basic procedure may be used to complete the remainder of the table 66. For example, to determine the score for square 84, five possible paths must be considered (i.e., paths from squares 86, 88, 90, 92, and 94). The five candidate scores are calculated as follows:

$$\text{score(square 84)} = \text{score(square 86)} + \log P(OCAT \mid SH)$$

$$\text{score(square 84)} = \text{score(square 88)} + \log P(CAT \mid SH)$$

$$\text{score(square 84)} = \text{score(square 90)} + \log P(AT \mid SH)$$

$$\text{score(square 84)} = \text{score(square 92)} + \log P(T \mid SH)$$

$$\text{score(square 84)} = \text{score(square 94)} + \log P(T \mid EY, SH)$$

The best of the five candidate scores is selected as the score for square 84 and the corresponding path information is recorded. In one approach, two arrays are filled during the search. The first array (i.e., score(letter, phoneme)) records the score of the best path to each square in the table 66. The second array (i.e., psi(letter, phoneme)) records the square from which each square in the array was reached on the best path to that square.

After the table 66 has been filled, a backtracking process is performed to identify the best path through the table. Starting with the last row in the last column of the table 66, the psi array is used to identify the path that resulted in that high score. This identified path corresponds to the optimal segmentation for the subject word. This Viterbi process is performed for each word in the phonetic dictionary. Referring back to Fig. 3, after supervised segmentation has been performed for the words, new phoneme emission and diphone emission probability matrices are generated using the results of the supervised segmentation (block 40). A simple count strategy may again be used, as described previously. Cycles of supervised segmentation and regeneration of the probability matrices may then be repeated, in an iterative process, until a predetermined condition has been satisfied (block 42). Normally, the sum of the scores of all dictionary words will increase monotonically with each successive cycle. In one approach, cycles of segmentation and probability matrix re-calculation are performed until the sum of the scores ceases to grow (or grows at below a predetermined rate). In another approach, a predetermined number of cycles is performed. Other termination conditions for the iterative process are also possible.

In at least one embodiment of the invention, "annealing" is used during the generation of the new phoneme emission probability matrix and the new diphone emission probability matrix (see block 40). That is, all elements of the probability matrices that are below a predetermined threshold value are set to the threshold value (or to another value). Annealing may also be used during subsequent cycles of segmentation and matrix regeneration. In one possible technique, a first threshold value (e.g., 0.15) is used during the initial regeneration of the probability matrices and a progressively smaller threshold value is used on each successive cycle.

At this point in the training process, the phoneme emission probability matrix and the diphone emission probability matrix have been refined from their original incarnations. A number of diphones have been identified by the process and are listed in the diphone emission probability matrix along with corresponding count information. The diphone that typically occurs most often involves the emission of the letter "X" by the phoneme pair "K, S." The second most frequent diphone usually involves the emission of the letter "U" by the phoneme pair "Y, UW." Many other diphones are also identified, including many low count diphones. The identified diphones are now pruned to reduce the total number of legal diphones recognized by the system (block 44). In one approach, a predetermined number of diphones (e.g., 10 diphones) having the highest counts are selected during the pruning process. In another approach, all diphones having a count greater than a predetermined value are selected. Other pruning techniques are also possible.

With reference to Fig. 4, an extended set of phonemes is now established by adding the pruned diphones (block 46). In one implementation, for example, 10 pruned diphones and the empty phoneme are added to the 39 phonemes of the CMU Pronouncing Dictionary to generate an extended set of phonemes. From this point forward, the diphones are treated as ordinary phonemes and are thus permitted to emit letter strings having one to four letters. Using the extended set of phonemes, a supervised segmentation of each of the words in the dictionary is again undertaken (block 48). The supervised segmentation may include, for example, a Viterbi search similar to the one illustrated in Fig. 5. However, the Viterbi search will now be limited to the pruned set of diphones, rather than considering all possible diphones. Also, if the Viterbi search table includes a legal diphone within its vertical axis for a particular word, the search process must now consider that diphone emitting letter strings from one to four letters in length, rather than single letters as before. Otherwise, the scores for each of the squares are calculated in a similar manner to that described previously. For each word in the dictionary, a corresponding table is filled in and backtracking is used to identify the optimal path through the table. Even if the dictionary pronunciation of a word includes a phoneme pair that forms a legal diphone, the Viterbi process will not automatically interpret the pair as such. That is, the phoneme pair will only be interpreted as a diphone if the highest scored path recognizes it as a diphone.

After supervised segmentation is complete, a new phoneme emission probability matrix is generated using the segmentation results (block 50). A phoneme "transition" probability matrix is also generated at this point. In addition to the original phonemes, the phoneme emission probability matrix will also include emission probabilities for the pruned diphones. The phoneme transition probability matrix will be based on probabilities that, given a previous phoneme, a particular phoneme will occur (i.e., P(phoneme | previous phoneme). As before, a simple count approach may be used to generate these matrices. In another approach, the phoneme transition probability matrix is initialized so that all transition probabilities have the same value. These initial values may then change during subsequent cycles of segmentation and matrix regeneration. After the new phoneme emission probability matrix and phoneme transition probability matrix have been generated, one or both of the matrices may be annealed as described previously.

Supervised segmentation is again performed for the dictionary words using the new phoneme emission probability information and the new phoneme transition probability information (block 52). Again, a Viterbi search may be performed to segment the words. However, the scores that are generated during the search will now involve transition probabilities as well as emission probabilities. For example, with reference to Fig. 5, to generate a score for square 84, the following candidate scores have to be considered:

$$\text{score(square 84)} = \text{score(square 86)} + \log P(\text{OCAT} \mid \text{SH}) + \log P(\text{SH} \mid \text{phoneme 86})$$

$$score(square\ 84) = score(square\ 88) + \log P(CAT \mid SH) + \log P(SH \mid phoneme\ 88)$$

$$score(square\ 84) = score(square\ 90) + \log P(AT \mid SH) + \log P(SH \mid phoneme\ 90)$$

$$score(square\ 84) = score(square\ 92) + \log P(T \mid SH) + \log P(SH \mid phoneme\ 92)$$

where phoneme 86 is the phoneme associated with the best path leading to square 86, phoneme 88 is the phoneme associated with the best path leading to square 88, phoneme 90 is the phoneme associated with the best path leading to square 90, and phoneme 92 is the phoneme associated with the best path leading to square 92. If phoneme pair "EY, SH" were a legal diphone, additional candidate scores would also have to be considered for this diphone (for letter string having lengths from 1 to 4 letters). The best candidate score is selected and recorded along with the corresponding path information. For each word in the dictionary, a Viterbi search table is generated as described above. Backtracking is then used to identify the optimal path through the table to determine the appropriate segmentation for the word.

Using the results of the latest segmentation, an updated phoneme emission probability matrix and phoneme transition probability matrix are generated (block 54). As before, a count approach may be used. For example, in one implementation, the following counts are generated for all phonemes: count (letter string | phoneme) and count (phoneme | previous phoneme). The count information is then used to generate the probability matrices. The supervised segmentation and matrix regeneration cycle may then be repeated until a predetermined condition has been satisfied (block 56). For example, the cycle may be repeated until the sum of the scores for all words ceases to grow (or grows at below a predetermined rate) or a predetermined number of cycles has been performed. Annealing may be performed during one or more of these cycles, as described previously. Eventually, final phoneme emission probability and phoneme transition probability matrices are generated. These matrices are stored for use during future text-to-phoneme parsing operations (block 58).

In the discussion above, it was assumed that a conventional Markov process (such as the one illustrated in Fig. 1) was being used. In at least one embodiment of the present invention, a modified HMM process is used. For example, Fig. 6 is a diagram illustrating a generalized HMM process 100 in accordance with an embodiment of the present invention. As illustrated in Fig. 6, a previous phoneme (e.g., empty phoneme 110) is first presumed to induce a subsequent phoneme (e.g., phoneme "R" 112). The previous and subsequent phonemes are then presumed to induce a letter string (e.g., letter "R" 114). This is illustrated in Fig. 6 by arrows 102 and 104. The subsequent phoneme (e.g., phoneme "R" 112) and the letter string (e.g., letter "R" 114) are then presumed to induce a next phoneme (e.g., phoneme "AY" 116). This is illustrated in Fig. 6 by arrows 106 and 108. This process continues from left to right with phoneme i and phoneme i+1 inducing letter string i+1 and phoneme i+1 and letter string i+1 inducing phoneme i+2.

To implement the generalized HMM process 100 of Fig. 6, a "generalized" emission probability matrix and a "generalized" transition probability matrix may be defined. The generalized emission probability matrix may include, for example, probabilities that specific letter strings will be induced given a phoneme and a previous phoneme (i.e., P(letter string | phoneme, previous phoneme)). The generalized transition probability matrix may include, for example, probabilities that specific phonemes will occur given a previous phoneme and a previous letter string (i.e., P(phoneme | previous phoneme, previous letter string)). In at least one embodiment of the present invention, the training method illustrated in Figs. 3 and 4 is modified to generate the generalized emission probability matrix and generalized transition probability matrix described above. For example, in block 54 of Fig. 4, instead of generating a phoneme emission probability matrix and a phoneme transition probability matrix, the generalized emission probability matrix and generalized transition probability matrix may be generated using the results of the most recent supervised segmentation. Additional cycles of segmentation and matrix regeneration may then be performed to further refine the generalized emission probability matrix and generalized transition probability matrix. Final matrices are eventually generated and stored for later use during text-to-phoneme parsing operations.

After training is completed, the probability matrices that were generated during the training phase may be used to perform text-to-phoneme parsing. That is, the matrices may be used to generate one or more phoneme strings corresponding to a written word. The individual word that is parsed does not have to be one of the words from the phonetic dictionary that was used during training. On the contrary, a text-to-phoneme parser in accordance with the invention may be used to parse a wide variety of words not typically included within a phonetic dictionary, such as personal names. In one approach, after a written word has been entered for parsing, an "unsupervised" segmentation of the word is undertaken. This segmentation is called "unsupervised" because no prior knowledge of the underlying phoneme string is assumed. The segmentation may be performed in a manner similar to the previously described segmentation operations. That is, a Viterbi search table may be used that includes the letters of the written word in the horizontal axis and phonemes in the vertical axis. However, instead of using the phonemes of the word itself (which are unknown at this point), all of the phonemes in the extended set of phonemes are included in the vertical axis of the table. The search process proceeds in substantially the same manner described previously. Scores are generated for individual squares in the table while moving from left to right in a column by column fashion. Path information is also recorded for the squares. When the table is complete, a best overall score is identified and backtracking is used to determine the corresponding path. This path corresponds to the most likely phoneme string for the input word.

When using the generalized HMM process, the text-to-phoneme parsing (decoding) may proceed as follows. The parser will work on a table whose horizontal axis includes the letters to be parsed and whose vertical axis includes the generalized phonemes (all phonemes participate). Three arrays are defined for the table that are filled recursively, letter by letter (i.e., column by column). The arrays are the "score" array, the "psiP" array, and the "psiL" array. The variable score[I][P] records the score of the best path through the table that ends at the square of the I'th letter and the P'th phoneme. The variable psiL[I][P] records the number of letters that were emitted in the last segment of the path by phoneme P (from one to four letters in one embodiment). Given psiL[I][P], it is known that the best path started from letter I-psiL[I][P]. The identity of the phoneme from which this path started thus needs to be determined. This phoneme is indicated by psiP[I][P]. The score of the path that arrives at the [I][P1] square from the [I-3][P2] square is given by the following recursive relation:

$$score[I][P1] = score[I-3][P2] + logP[P1|P2, \text{letter string attached with P2})$$
$$+ logP(3 \text{ letters I-2, I-1, I } | P1, P2)$$

where the first logP term is the generalized transition term, the element "letter string attached with P2" is obtained from psiL[I-3][P2], and the second logP term is the generalized emission term. The path with the highest score is chosen. For example, if the score above is the highest score, then we set psiL[I][PI]=3 and psiP[I][P1]=P2.

To parse a given word, one must first "enter" the word and eventually "exit" the word. In one embodiment of the invention, an empty letter is placed before and after the word to be parsed. For example, the word "RIGHT" is represented as "_RIGHT_" (the underscore indicating an empty letter). In the word "_RIGHT_," the first underscore corresponds to index I=0, the "R" corresponds to index I=1, and so on. All entrance paths start from the square [I=0][phoneme=0]. One possible entrance path is given by the recursion:

$$score[I=1][P1=R] = score[I=0][phoneme=0] + logP[P1=R|P2=0, \text{letter\_string=empty})$$
$$+ logP(\text{letter\_string=R}|P1=R, P2=empty)$$

All exit paths end at the square [I=6][P1=empty]. One possible exit path is given by the recursion:

$$score[I=6][P1=empty] = score[I=5][P2=T] + logP[P1=empty|P2=T, \text{letter\_string=T})$$
$$+ logP(\text{letter=empty}|P1=empty, P2=T)$$

If the word "RIGHT" is parsed, there are seven columns in the table including the empty letters before and after the word. The "score" and "psi" arrays are filled column by column, starting from I=1 and leading up to I=6 (the empty exit letter). Only the empty phoneme is allowed for the empty letter (as shown in the exit equation above). After filling the arrays, backtracking is used to find the best parsing, starting from the square [I=6][P1=empty].

In at least one embodiment of the invention, the N-best phoneme strings corresponding to a written word are generated during the parsing process (where N is a positive integer greater than 1). These N-best phoneme strings may be presented to a user, for example, to allow the user to select a phoneme string (i.e., a pronunciation) for the input word from the N choices. To generate the N-best strings, it is necessary to keep track of the N-best paths leading to each square in the search table. Backtracking is then performed for the N-best scores in the last column of the table. The N-best phoneme strings offered by the parser for a given word may be organized as a pronunciation network. This organization requires less memory when transformed into an acoustic model of the word.

To reduce memory usage in the parser, the number of best paths that are saved for each letter of the written word (i.e., each column of the search table) may be limited. For example, in each column of the search table, instead of saving a best path for all of the phonemes listed in the vertical axis (e.g., 49 phonemes in one embodiment), best path information may be saved for only a fraction of the phonemes. While testing this approach, it was found that little or no performance degradation was experienced when only the 10 best paths were saved for each column of a table. At the same time, a five-fold reduction in memory use was achieved. A similar result may be obtained when searching for the N-best phoneme strings.

In the description above, various data structures (e.g., matrices, arrays, etc.) have been identified in conjunction with the disclosed embodiments. It should be appreciated that the particular formats within which data is assembled and stored in these embodiments are not meant to be limiting.

Although the present invention has been described in conjunction with certain embodiments, it is to be understood that modifications and variations may be resorted to without departing from the spirit and scope of the invention as those skilled in the art readily understand. Such modifications and variations are considered to be within the purview and scope of the invention and the appended claims.

1. A method for use in training a text-to-phoneme parser system, comprising:

   segmenting words based on known word pronunciations to generate segmentation results;
   generating probability information using said segmentations results, said probability information including a plurality of probability values;
   identifying probability values within said probability information that are below a first threshold value; and
   changing said identified probability values to a predetermined value.

2. The method of alternative embodiment 1, wherein:

   said predetermined value is said first threshold value.

3. The method of alternative embodiment 1, further comprising:

   re-segmenting said words, after changing said identified probability values, based on said probability information to generate new segmentation results.

4. The method of alternative embodiment 3, further comprising:

   generating new probability information using said new segmentations results, said new probability information including a plurality of probability values;
   detecting probability values within said new probability information that are below a second threshold value; and
   changing said detected probability values to a second predetermined value.

5. The method of alternative embodiment 4, wherein:

   said second threshold value is less than said first threshold value.

6. The method of alternative embodiment 1, wherein:

   said probability information includes phoneme emission probabilities.

7. The method of alternative embodiment 1, wherein:

   said probability information includes a probability that a specific letter string will be induced given a present phoneme and a previous phoneme.

8. The method of alternative embodiment 1, wherein:

   said probability information includes diphone emission probabilities, said diphone emission probabilities including a probability that a specific letter will be emitted by a given phoneme pair.

9. The method of alternative embodiment 1, wherein:

said probability information includes phoneme transition probabilities.

10. The method of alternative embodiment 9, wherein:

said phoneme transition probabilities include a probability that a specific phoneme will be induced given a previous phoneme.

11. The method of alternative embodiment 9, wherein:

said phoneme transition probabilities include a probability that a specific phoneme will be induced given a previous phoneme and a letter string emitted by said previous phoneme.

12. The method of alternative embodiment 9, wherein:

segmenting words includes segmenting words based on corresponding pronunciations within a phonetic dictionary.

**Claims**

1. A method for training a text-to-phoneme parser system, comprising:

generating first information based on pronunciations within a phonetic dictionary, said first information identifying a plurality of potential diphones;
pruning said plurality of potential diphones based on frequency of occurrence information to produce pruned diphones;
forming an extended set of phonemes that includes said pruned diphones as legal phonemes; and
generating second information, based on said extended set of phonemes, for use in performing text-to-phoneme parsing.

2. The method of claim 1, wherein:

said first information includes diphone emission information.

3. The method of claim 1, wherein:

said first information includes phoneme emission information.

4. The method of claim 1, wherein:

generating first information includes performing supervised segmentation of words within said phonetic dictionary.

5. The method of claim 4, wherein:

performing supervised segmentation includes performing a Viterbi search to identify an optimal segmentation for a first word based on a set of phonemes identified for said first word within said phonetic dictionary.

6. The method of claim 1, wherein:

generating first information includes performing cycles of supervised segmentation and probability generation for words within said phonetic dictionary.

7. The method of claim 1, wherein:

pruning said plurality of potential diphones includes selecting diphones from said plurality of potential diphones that have a highest number of occurrences.

**8.** The method of claim 1, wherein:

said phonetic dictionary identifies an initial set of phonemes; and
forming an extended set of phonemes includes adding said pruned diphones to said initial set of phonemes.

**9.** The method of claim 1, wherein:

generating second information includes generating phoneme emission probabilities for phonemes within said extended set of phonemes.

**10.** The method of claim 1, wherein:

generating second information includes generating phoneme transition probabilities for phonemes within said extended set of phonemes.

**11.** The method of claim 1, wherein:

generating second information includes generating a probability that a specific letter string will be induced given a present phoneme and a previous phoneme.

**12.** The method of claim 1, wherein:

generating second information includes generating a probability that a specific phoneme will be induced given a previous phoneme and a letter string emitted by said previous phoneme.

**13.** The method of claim 1, wherein:

generating second information includes performing supervised segmentation of words within said phonetic dictionary.

**14.** The method of claim 1, wherein:

generating second information includes performing cycles of supervised segmentation and probability generation for words within said phonetic dictionary.

**15.** A method for use in training a text-to-phoneme parser system, comprising:

segmenting words based on known word pronunciations to generate segmentation results; and
generating probability information using said segmentation results, said probability information including generalized transition probability information, said generalized transition probability information including a probability that a specific phoneme will be induced given a previous phoneme and a letter string emitted by said previous phoneme.

**16.** The method of claim 15, wherein:

said probability information includes generalized emission probability information, said generalized emission probability information including a probability that a specific letter string will be induced given a present phoneme and a previous phoneme.

**17.** The method of claim 15, wherein:

segmenting words includes segmenting words based on corresponding pronunciations within a phonetic dictionary.

**18.** The method of claim 15, wherein:

segmenting words includes identifying a best path through a Viterbi search table for a first word.

**19.** The method of claim 15, further comprising:

repeating segmenting words and generating probability information until a predetermined condition has been satisfied.

**20.** A text-to-phoneme parsing system, comprising:

a probability database including generalized transition probability information, said generalized transition probability information including a probability that a specific phoneme will occur given a previous phoneme and a letter string emitted by said previous phoneme, and
a text-to-phoneme parser to generate at least one phoneme string for a written input word based on information within said probability database.

**21.** The text-to-phoneme parsing system of claim 20, wherein:

said probability database includes generalized emission probability information, said generalized emission probability information including a probability that a specific letter string will be induced given a present phoneme and a previous phoneme.

**22.** The text-to-phoneme parsing system of claim 20, wherein:

said probability database includes probability information that was generated based upon word pronunciations within a phonetic dictionary.

**23.** The text-to-phoneme parsing system of claim 20, wherein:

said text-to-phoneme parser generates the N best phoneme strings for said written input word, where N is an integer greater than 1.

10 —

| | | | R | | | IGH | | | T | |
|---|---|---|---|---|---|---|---|---|---|---|

R    IGH    T

↑~12    ↑~12    ↑~12

| _ | →14→ | R | →14→ | AY | →14→ | T | →14→ | _ |
|---|---|---|---|---|---|---|---|---|

*Fig. 1*

20 —

26

PROBABILITY
DATABASE

↕

22

| TEXT
ENTRY | —WORD→ | HMM-BASED
TEXT TO
PHONEME
PARSER | → | PHONEME
STRING(S) |
|---|---|---|---|---|

24

*Fig. 2*

30 ⌐⟋                                                                  32 ⌐

```
┌─────────────────────────────────────────┐
│        PROVIDE PHONETIC DICTIONARY        │
└─────────────────────────────────────────┘
                    │
                    ▼                          34
┌─────────────────────────────────────────┐
│    PERFORM LINEAR SEGMENTATION ON WORDS IN │
│    PHONETIC DICTIONARY BASED ON DICTIONARY │
│              PRONUNCIATION                  │
└─────────────────────────────────────────┘
                    │
                    ▼                          36
┌─────────────────────────────────────────┐
│  GENERATE INITIAL PHONEME EMISSION PROBABILITY │
│  MATRIX AND INITIAL DIPHONE EMISSION PROBABILITY│
│  MATRIX BASED ON RESULTS OF LINEAR SEGMENTATION │
└─────────────────────────────────────────┘
                    │
                    ▼                          38
┌─────────────────────────────────────────┐
│ PERFORM SUPERVISED SEGMENTATION FOR EACH WORD │
│ USING INITIAL PHONEME EMISSION PROBABILITY MATRIX │
│ AND INITIAL DIPHONE EMISSION PROBABILITY MATRIX │
└─────────────────────────────────────────┘
                    │
                    ▼                          40
┌─────────────────────────────────────────┐
│   GENERATE NEW PHONEME EMISSION PROBABILITY │
│   MATRIX AND DIPHONE EMISSION PROBABILITY MATRIX │
│   BASED ON RESULTS OF SUPERVISED SEGMENTATION │
└─────────────────────────────────────────┘
                    │
                    ▼                          42
┌─────────────────────────────────────────┐
│ REPEAT SUPERVISED SEGMENTATION AND GENERATION │
│      OF NEW PROBABILITY MATRICES UNTIL       │
│    PREDETERMINED CONDITION IS SATISFIED      │
└─────────────────────────────────────────┘
                    │
                    ▼                          44
┌─────────────────────────────────────────┐
│         PRUNE RESULTING DIPHONES          │
└─────────────────────────────────────────┘
                    │
                    ▼
                   (A)
```

*Fig. 3*

A

FORM EXTENDED SET OF PHONEMES THAT INCLUDES
PRUNED DIPHONES
— 46

PERFORM SUPERVISED SEGMENTATION OF WORDS
USING EXTENDED SET OF PHONEMES
— 48

GENERATE NEW PHONEME EMISSION PROBABILITY
MATRIX AND TRANSITION PROBABILITY MATRIX BASED
ON RESULTS OF LATEST SUPERVISED SEGMENTATION
— 50

PERFORM SUPERVISED SEGMENTATION OF WORDS
USING EXTENDED SET OF PHONEMES, PHONEME
EMISSION PROBABILITY MATRIX, AND PHONEME
TRANSITION PROBABILITY MATRIX
— 52

GENERATE NEW PHONEME EMISSION PROBABILITY
MATRIX AND TRANSITION PROBABILITY MATRIX BASED
ON RESULTS OF LATEST SUPERVISED SEGMENTATION
— 54

REPEAT SUPERVISED SEGMENTATION AND GENERATION
OF NEW PROBABILITY MATRICES UNTIL PREDETERMINED
CONDITION IS SATISFIED
— 56

STORE FINAL PROBABILITY MATRICES FOR USE DURING
TEXT-TO-PHONEME PARSING
— 58

*Fig. 4*

Fig. 5

*Fig. 6*

European Patent Office

**EUROPEAN SEARCH REPORT**

Application Number

EP 07 01 5758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUK R W P ET AL: "STOCHASTIC PHONOGRAPHIC TRANSDUCTION FOR ENGLISH" COMPUTER SPEECH AND LANGUAGE, ELSEVIER, LONDON, GB, vol. 10, 1996, pages 133-153, XP001011165 ISSN: 0885-2308 | 1-10,13, 14 | INV. G10L13/08 |
| Y | * the whole document * | 11,12 | |
| X | DE 199 42 178 C1 (SIEMENS AG [DE]) 25 January 2001 (2001-01-25) * abstract * * page 2, lines 35-50 * | 1,4,6,8, 13,14 | |
| X | DUTOIT T: "Introduction To Text-To-Speech Synthesis ntroduction To Text-To-Speech Synthesis" AN INTRODUCTION TO TEXT-TO-SPEECH SYNTHESIS, TEXT, SPEECH AND LANGUAGE TECHNOLOGY VOL. 3, DORDRECHT : KLUWER ACADEMIC PUBL, NL, 1997, pages 115-125, XP002157980 ISBN: 0-7923-4498-7 | 15-23 | |
| Y | * the whole document * | 11,12 | TECHNICAL FIELDS SEARCHED (IPC) G10L |

The present search report has been drawn up for all claims

| Place of search | Date of completion of the search | Examiner |
|---|---|---|
| The Hague | 19 September 2007 | Quélavoine, Régis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 01 5758

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2007

| Patent document cited in search report | Publication date | Patent family member(s) | Publication date |
|---|---|---|---|
| DE 19942178 C1 | 25-01-2001 | WO 0118792 A1 <br> EP 1214703 A1 | 15-03-2001 <br> 19-06-2002 |

EPO FORM P0459

For more details about this annex : see Official Journal of the European Patent Office, No. 12/82